# EUROPEAN PATENT SPECIFICATION

(11) **EP 0 670 107 B1**
(45) Date of publication and mention of the grant of the patent: **02.07.1997**
(21) Application number: 95200488.5
(22) Date of filing: 28.02.1995
(51) Int. Cl.: A01F 29/00, A01F 25/20, A01D 90/10, A01D 87/00

(54) **A device and a method for metering silage material**
Verfahren und Vorrichtung um Silage zu dosieren
Appareil et méthode pour doser de l'ensilage

(30) Priority: 28.02.1994 NL 9400297
(43) Date of publication of application: 06.09.1995
(73) Proprietor: Trioliet Mullos B.V., NL-7581 HE Losser (NL)
(72) Inventor: Van der Plas, Nicolaas, NL-7576 WB Oldenzaal (NL)
(74) Representative: Louet Feisser, Arnold

(56) References cited:
- FR-A- 2 373 957
- US-A- 1 328 618
- US-A- 2 605 106
- US-A- 2 871 021
- US-A- 3 104 111
- US-A- 3 915 392

## Description

The invention relates to a device for metering silage material, in particular a vehicle for transporting, loosening and distributing silage material, provided with transport means for pushing the silage material in the direction of at least one loosening roller, which loosening roller rotates in such a manner that said silage material is carried along in upward direction, whereby a metering roller is provided above said loosening roller, parallel thereto, which is capable of rotating movement in the same direction, whereby all parts of the metering roller are located within the cylindrical surface of rotation of the metering roller. Such device is disclosed in EP-A-0 032 776 whereby the metering roller consists of a cylindrical drum provided with catch strips being welded on the surface of said drum. A device of this type is also described in US-A-3 873 032.

Usually such device is mobile and can be hitched to a tractor. Means may thereby be provided for cutting loose ensilaged material or picking up said material in blocks and depositing it on to the vehicle, after which the device is moved to the place where the cattle are fed. Inside the device the silage material is loosened, after which it is deposited in the correct quantities at the places where the cattle feed on the silage material.

The object of the invention is to provide a device for metering silage material, whereby said silage material is processed in an effective manner, so that it can be deposited at the feeding place in a suitable form and in the correct quantities, whereby the roller can be designed in such a manner that it is possible to look through the roller.

In order to accomplish that objective the metering roller is of an open construction such that recesses located between parts forming the cylindrical surface of rotation have no base. Preferably the roller surface consists of substantially axially mounted bars, which bars may have a substantially rectangular cross-section.

The purpose of the metering roller is to prevent the loosening roller from carrying too much silage material to the discharge side of the loosening roller, that is to the part of the device from where the silage material can be delivered to a feeding place. The loosening roller thereby carries the material along by moving it upwards and subsequently over the loosening roller. The purpose of the metering roller is thereby to prevent the loosening roller from carrying along too much material or material that has not been loosened, whereby the metering roller must move said excess material from the space between the loosening roller and the metering roller to the supply side of the loosening roller, that is the side whereby the transport means are located.

By providing the metering roller according to the invention with a roller surface not comprising any projecting parts, but recesses, it is achieved that the metering roller only engages silage material if said material is pushed against the surface of the metering roller with a certain force. As long as a correct amount of silage material is carried along to the discharge side by the loosening roller, the silage material is not hindered by the metering roller, because the silage material is hardly pressed against the metering roller surface, if at all. As soon as there is a risk of too much silage material being carried along by the loosening roller, the silage material is pressed against the metering roller surface, as a result of which silage material is carried along by the metering roller surface and returned to the supply side of the device. The silage material is slightly pressed into the recesses of the metering roller surface thereby, as a result of which the required friction between the silage material and the roller surface is created and the silage material is engaged. Because the silage material is only engaged by the metering roller insofar as necessary, the driving energy required for this is minimal.

According to one aspect of the invention the metering roller may be provided with several radially extending flanges, which are distributed over the length of the roller, and to which the bars forming the roller surface are secured. An advantage of such a metering roller is the possibility to design the metering roller in such a manner that it is possible to look through the roller. In particular when the metering roller is mounted on a vehicle behind a tractor, it is important that the driver of the tractor has a good view of what is happening on the vehicle. This makes it possible to check the operation of the rollers and also the depositing of silage material on to the vehicle.

According to another aspect of the invention the metering roller is positioned not straight above the loosening roller, but somewhat at the side of the transport means, at the aforesaid supply side, therefore. It has become apparent that the operation of the device can be influenced positively by slightly placing the gap between the loosening roller and the metering roller at the supply side.

According to another aspect of the invention the centre-to-centre distance between the metering roller and the loosening roller may be adjustable, as a result of which the distance between the rollers can be adjusted in dependence on the desired metering and/or on the characteristics of the respective silage material.

According to further aspects of the invention the diameter of the metering roller may be smaller than the diameter of the loosening roller, and the circumferential velocity of the metering roller may be smaller than that of the loosening roller.

Furthermore the drive of the loosening roller and of the metering roller may be designed such that the loosening roller is driven at one end, while the metering roller is driven by being drivably connected with the other end of the loosening roller. In this way the drive of the two rollers may be designed such that the drive requires a minimum amount of space at both ends of the rollers.

Furthermore some space may be provided above the metering roller, so that the silage material can be passed therethrough when being carried along towards the discharge side by the metering roller. Although the silage material is not intended to be carried along to a location above the metering roller, this may be the case under certain circumstances, and in that case a blockage must be prevented.

In order to prevent silage material from landing outside the device, it may be desirable to construct the walls of the device with a substantial height. This may reduce the view of the person present on the tractor to which the device is coupled. Besides the metering roller also the walls of the device, at least the walls that extend parallel to the axes of the rollers, may according to the invention be made transparent entirely or only near their upper parts, by providing recesses in said walls, in order to ensure a good view to the interior of the device. According to another aspect of the invention the walls may be made of a perforated plate material, which guarantees a certain transparency. In particular the upper part of the wall surrounding the discharge side of the metering roller may be made of a perforated plate material.

According to another aspect of the invention the transport means, which comprise a bottom chain, can be driven in such a manner that their speed and/or pushing force is adjustable. Preferably the bottom chain is driven hydraulically. By controlling the force and the speed at which the silage material is pressed against the loosening roller, an adequate operation of the loosening roller may be obtained, whereby blockages are prevented.

The invention furthermore relates to a method for metering silage material according to claim 15, whereby said silage material is loosened and displaced in upward direction by a loosening roller provided with catch means, and whereby the silage material carried along by said loosening roller is metered by means of a metering roller provided above said loosening roller, parallel thereto, which rotates in the same direction and which is according to the invention provided with a surface that does not comprise projecting parts, said surface being provided with recesses, through which silage material that is being pressed against the surface of the metering roller is carried along by said roller. The degree to which the silage material is carried along by the metering roller is thereby dependent on the force with which the silage material is pressed against the surface of the metering roller.

Further aspects of the invention will be explained and or referred to in the description of the Figures and/or in the claims.

In order to more fully explain the invention an example of an embodiment of the device for metering silage material will be described in more detail hereafter with reference to the drawing, in which:
Figure 1 is a diagrammatic, perspective view, partially in section, of a metering device; and
Figure 2 is a diagrammatic longitudinal sectional view of the device.

The Figures are merely diagrammatic illustrations of the example of the embodiment, wherein similar parts are numbered alike in the Figures.

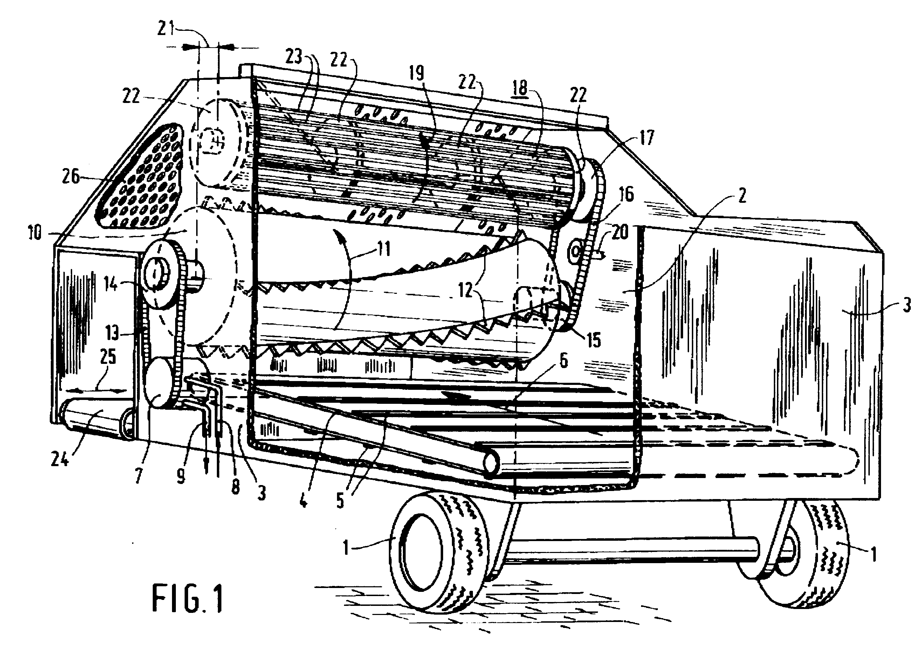

The embodiment comprises a vehicle for transporting, loosening and distributing silage material, which vehicle can be hitched to a tractor. The vehicle is provided with a chassis having two wheels 1. Furthermore the vehicle is provided with a loading space 2, which is visible because part of the wall 3 has been left out in Figure 1. A certain amount of silage material can be deposited in the loading space 2, for which purpose the vehicle may be provided with means for cutting the silage material from a stock of silage material, or picking said silage material up in blocks and depositing it in the loading space. The device according to the present embodiment is not fitted with such means, however.

The bottom of the loading space is provided with a bottom chain 4 having cross bars 5, which are capable of movement in the direction of the arrow 6. The bottom chain is driven by means of a hydraulic motor 7, the hydraulic supply line 8 and discharge line 9 of which are diagrammatically indicated. The silage material present in the loading space 2 is moved in the direction of the arrow 6, towards the loosening roller 10, by means of the bottom chain 4. The hydraulic motor can thereby be controlled in such a manner that the force with which the silage material is pushed against the loosening roller 10 is adjustable.

The loosening roller 10 rotates in the direction of the arrow 11, so that the catch means 12 present on the loosening roller 10 are moved upwards against the silage material, which is pushed against the loosening roller by means of the bottom chain 4. In the present embodiment the loosening roller 10 is driven by a hydraulic motor, which is integrated with the hydraulic motor 7 of the bottom chain. Furthermore it is possible, and by no means unusual, to drive the loosening roller via a gear box, which is driven by the power take-off shaft of the tractor. In the present embodiment the chain wheel 14 of the loosening roller 10 is driven via the chain 13. A chain wheel 15 is provided at the other end of the loosening roller 10, said chain wheel 15 driving a chain wheel 17 via chain 16, so that the metering roller 18 connected to the chain wheel 17 rotates in the same direction as the loosening roller 10, as is indicated by means of arrow 19.

The loosening roller 10 and the metering roller 18 are rotatably journalled, in mutually parallel relationship, in the frame of the device. Because the loosening roller 10 drives the metering roller 18 via chain 16, a difference in circumferential velocity between said rollers may be effected by suitably selecting the chain wheels 15 and 17. Preferably the circumferential velocity of the metering roller 18 is lower than the circumferential velocity of the loosening roller 10. Furthermore the mutual distance between the metering roller and the loosening roller may be varied by means not shown. The tension of the chain 16 may thereby be maintained by means of the chain tensioner 20 (diagrammatically shown). Furthermore the Figure shows that the metering roller 18 and the loosening roller 10 are not in the same vertical plane. As is indicated at 21, the axis of rotation of metering roller 18 is staggered relative to the axis of rotation of loosening roller 10, and that in such a manner that metering roller 18 is shifted in the direction of the loading space 2.

Metering roller 18 is provided with four disc-shaped, radially disposed flanges 22, to the outer edge of which axially oriented bars 23 are secured. Said bars 23 form the surface of metering roller 18, as a result of which a surface is formed which does not have projecting parts, but which does have recesses, which are formed by the space between the bars. The bars 23 for example have a rectangular cross-section, with dimensions between 1 - 2 cm.

The purpose of the metering roller 18 is that the catch means 12 of loosening roller 10 do not carry along too much silage material from the loading space 2. The material which is carried along by loosening roller 10 lands in the gap between loosening roller 10 and metering roller 18, and if an excess of silage material lands in this gap, said material will press against the roller surface of metering roller 18, as a result of which it will be carried back to loading space 2. Since the roller surface of metering roller 18 is fitted with axially oriented bars, between which a space is present, the silage material will be carried along by the metering roller 18 as soon as it is pressed against the roller surface with some force. By varying the distance between metering roller 18 and loosening roller 10 the amount of silage material passing the gap between the two rollers can be regulated.

At the other side of loosening roller 10, that is behind loosening roller, seen from loading space 2, lies the space where the metered silage material lands after being carried along by the loosening roller 10. Said space is provided with a transversely disposed conveyor belt 24, which is capable of movement in either direction, as is indicated by means of arrow 25. The metered silage material can be thrown sideways out of the device by means of the conveyor belt 24, namely at the feeding place of an animal.

Above the metering roller 18 a space has been reserved, which functions to pass silage material that may be carried along by metering roller 18. Although generally this will not happen and is not supposed to happen, silage material may attach to the metering roller in such a manner that it is carried along to the other side of the roller. By creating sufficient space above the metering roller 18 clogging of the device is thus prevented.

In order to prevent silage material from landing outside the device, the device is provided with side walls extending as high as the top of the device, in particular near the metering roller. The wall 26 located at the front side of the device, that is at the side of the device near the tractor to which the device is hitched, is thereby provided with recesses in the form of holes, which makes said wall transparent, at least partially so. This makes it possible for the driver of the tractor to which the device is hitched to see as far as the inside of the device. Since the metering roller comprises bars and radially oriented flanges, also the metering roller is transparent, at least partially so, so that the driver of the tractor can see as far as the inside of the loading space of the device.

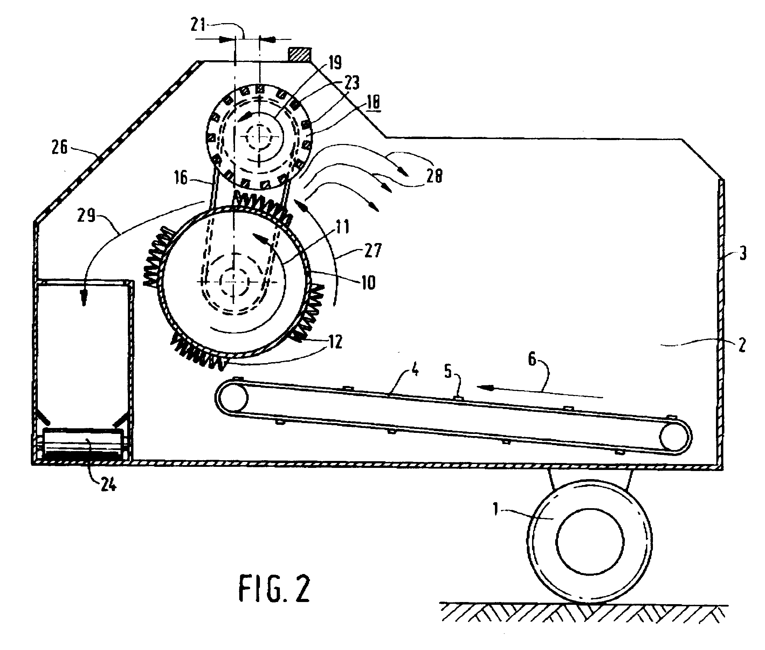

Figure 2 shows a diagrammatic longitudinal section of the device, whereby the bottom chain 4, the loosening roller 10 and the metering roller 18 are illustrated as they are related to each other. Arrow 27 indicates how the silage material is carried along by the catch means 12 from loosening roller 10 in the direction of the gap between the metering roller 18 and the loosening roller 10, and the arrows 28 indicate how any excess silage material being carried along is returned to the loading space 2 by means of the metering roller. The metered silage material which passes the gap between loosening roller 10 and metering roller 18 lands on the transport roller 24, as indicated by arrow 29.

## Claims

1. A device for metering silage material, in particular a vehicle for transporting, loosening and distributing silage material, provided with transport means (4,5) for pushing the silage material in the direction of at least one loosening roller (10), which loosening roller (10) rotates in such a manner that said silage material is carried along in upward direction, whereby a metering roller (18) is provided above said loosening roller (10), parallel thereto, which is capable of rotating movement in the same direction, whereby all parts of the metering roller (18) are located within the cylindrical surface of rotation of the metering roller (18), characterized in that the metering roller (18) is of an open construction such that recesses located between parts (23) forming the cylindrical surface of rotation have no base.

2. A device according to claim 1, characterized in that said roller surface consists of substantially axially mounted bars (23).

3. A device according to claim 2, characterized in that said bars (23) have a substantially rectangular cross-section.

4. A device according to claim 2 or 3, characterized in that said bars (23) are secured to several radially extending flanges (22), which are distributed over the length of said roller (18).

5. A device according to any one of the preceding claims, characterized in that said metering roller (18) is positioned not straight above said loosening roller 10), but somewhat at the side of the transport means (4,5) (supply side).

6. A device according to any one of the preceding claims, characterized in that the centre-to-centre distance between said metering roller (18) and said loosening roller (10) is adjustable.

7. A device according to any one of the preceding claims, characterized in that the diameter of said metering roller (18) is smaller than the diameter of said loosening roller (10).

8. A device according to any one of the preceding claims, characterized in that the circumferential velocity of the metering roller (18) is smaller than that of the loosening roller (10).

9. A device according to any one of the preceding claims, characterized in that said loosening roller (10) is driven at one end, while the other end of said loosening roller (10) is drivingly connected with said metering roller (18).

10. A device according to any one of the preceding claims, characterized in that said a space is provided above the metering roller (18), through which silage material can be passed, which may be carried along by the metering roller (18).

11. A device according to any one of the preceding claims, characterized in that the walls (26) of the device that extend parallel to the roller axes have been made transparent, at least near their upper parts, by means of recesses.

12. A device according to claim 11, characterized in that said walls (26) are at least partially made of a perforated plate material.

13. A device according to any one of the preceding claims, characterized in that said transport means (4,5) comprise a bottom chain (4), whose speed and/or pushing force is adjustable.

14. A device according to claim 13, characterized in that said bottom chain (4) is hydraulically driven.

15. A method for metering silage material, whereby a device according one of the preceding claims is used, whereby said silage material is loosened and displaced in upward direction by a loosening roller (10) provided with catch means (12), and whereby the silage material carried along by said loosening roller (10) is metered by means of a metering roller (18) provided above said loosening roller (10), parallel thereto, by rotating said metering roller (18) in the same direction, characterized in that parts (23) forming the cylindrical surface of rotation of the metering roller (18) are moved against the silage material, whereby recesses located between said parts (23) have no base.

16. A method according to claim 15, characterized in that the circumferential velocity of said metering roller (18) is smaller than that of said loosening roller (10).

## Patentansprüche

1. Eine Vorrichtung zur Dosierung von Silagematerial, insbesondere ein Fahrzeug zum Transport, Lockern und Verteilen von Silagematerial, die mit einer Transportvorrichtung (4, 5) zum Stoßen des Silagematerials in die Richtung von wenigstens einer Lockerungswalze (10) vorgesehen ist, wobei sich die Lockerungswalze (10) auf eine solche Weise dreht, daß das genannte Silagematerial in Aufwärtsrichtung mitgenommen wird, wobei eine Dosierungswalze (18) oberhalb der genannten Lockerungswalze (10), parallel dazu, vorgesehen ist, die einer Drehbewegung in der gleichen Richtung fähig ist, wodurch sich alle Teile der Dosierungswalze (18) innerhalb der zylindrischen Drehoberfläche der Dosierungswalze (18) befinden, **dadurch gekennzeichnet,** daß die Dosierungswalze (18) eine offene Konstruktion ist, so daß Ausnehmungen, die sich zwischen den Teilen (23) befinden, die die zylindrische Drehoberfläche bilden, keine Basis haben.

2. Eine Vorrichtung gemäß Anspruch 1, **dadurch gekennzeichnet,** daß die genannte Walzenoberfläche aus im wesentlichen axial angebrachten Stangen (23) besteht.

3. Eine Vorrichtung gemäß Anspruch 2, **dadurch gekennzeichnet,** daß die genannten Stangen (23) einen im wesentlich rechteckförmigen Querschnitt haben.

4. Eine Vorrichtung gemäß Anspruch 2 oder 3, **dadurch gekennzeichnet,** daß die genannten Stangen (23) an mehreren sich radial erstreckenden Flanschen (22) befestigt sind, die über die Länge der genannten Walze (18) verteilt sind.

5. Eine Vorrichtung gemäß irgendeinem der vorhergehenden Ansprüche , **dadurch gekennzeichnet,** daß die genannte Dosierungswalze (18) nicht gerade oberhalb der genannten Lockerungswalze (10) sondern etwas auf der Seite der Transportvorrichtung (4, 5) (Zufuhrseite) angeordnet ist.

6. Eine Vorrichtung gemäß irgendeinem der vorhergehenden Ansprüche , **dadurch gekennzeichnet,** daß der Mitte-zu-Mitte-Abstand zwischen der genannten Dosierungswalze (18) und der genannten Lockerungswalze (10) einstellbar ist.

7. Eine Vorrichtung gemäß irgendeinem der vorhergehenden Ansprüche , **dadurch gekennzeichnet,** daß der Durchmesser der genannten Dosierungswalze (18) kleiner als der Durchmesser der genannten Lockerungswalze (10) ist.

8. Eine Vorrichtung gemäß irgendeinem der vorhergehenden Ansprüche , **dadurch gekennzeichnet,** daß die Umfangsgeschwindigkeit der Dosierungswalze (18) kleiner als die der Lockerungswalze (10) ist.

9. Eine Vorrichtung gemäß irgendeinem der vorhergehenden Ansprüche , **dadurch gekennzeichnet,** daß die genannte Lockerungswalze (10) an einem Ende angetrieben ist, während das andere Ende der genannten Lockerungswalze (10) antriebsmäßig mit der genannten Dosierungswalze (18) verbunden ist.

10. Eine Vorrichtung gemäß irgendeinem der vorhergehenden Ansprüche , **dadurch gekennzeichnet,** daß ein genannter Raum oberhalb der Dosierungswalze (18) vorgesehen ist, durch den Silagematerial hindurchgehen kann, das von der Dosierungswalze (18) mitgeführt wird.

11. Eine Vorrichtung gemäß irgendeinem der vorhergehenden Ansprüche , **dadurch gekennzeichnet,** daß die Wände (26) der Vorrichtung, die sich parallel zu den Walzenachsen erstrecken, mittels Ausnehmungen wenigstens nahe ihren oberen Teilen durchsichtig gemacht worden sind.

12. Eine Vorrichtung gemäß Anspruch 11, **dadurch gekennzeichnet,** daß die genannten Wände (26) wenigstens teilweise aus einem gelochten Plattenmaterial hergestellt sind.

13. Eine Vorrichtung gemäß irgendeinem der vorhergehenden Ansprüche , **dadurch gekennzeichnet,** daß die genannte Transportvorrichtung (4, 5) eine Bodenkette (4) umfaßt, deren Geschwindigkeit und/oder Stoßkraft einstellbar ist.

14. Eine Vorrichtung gemäß Anspruch 13, **dadurch gekennzeichnet**, daß die genannte Bodenkette (4) hydraulische angetrieben wird.

15. Ein Verfahren zur Dosierung von Silagematerial, wobei eine Vorrichtung gemäß einem der vorhergehenden Ansprüche verwendet wird, wobei das genannte Silagematerial gelockert und in die Aufwärtsrichtung durch eine Lockerungswalze (10) verschoben wird, die mit Mitnehmereinrichtungen (12) versehen ist, und wobei das Silagematerial, das von der genannten Lockerungswalze (10) mitgeführt wird, mittels einer Dosierungswalze (18) dosiert wird, die oberhalb der genannten Lockerungswalze (10), parallel dazu, vorgesehen ist, indem die genannte Dosierungswalze (18) in der gleichen Richtung gedreht wird, **dadurch gekennzeichnet,** daß Teile (23), die die zylindrische Drehoberfläche der Dosierungswalze (18) bilden, gegen das Silagematerial bewegt werden, wobei Ausnehmungen, die zwischen den genannten Teilen (23) angeordnet sind, keine Basis haben.

16. Ein Verfahren gemäß Anspruch 15, **dadurch gekennzeichnet,** daß die Umfangsgeschwindigkeit der genannten Dosierungswalze (18) kleiner als die der genannten Lockerungswalze (10) ist.

## Revendications

1. Un dispositif de dosage de masse ensilée, en particulier, un véhicule pour le transport, la désagrégation et la distribution de masse ensilée, pourvu de moyens de transport (4, 5) pour pousser ou refouler la masse ensilée dans la direction d'au moins un rouleau de désagrégation (10), ledit rouleau de désagrégation (10) tournant de telle manière que ladite masse ensilée soit acheminée le long d'une direction ascendante, dans lequel il est prévu un rouleau de dosage (18) au dessus dudit rouleau de désagrégation (10), parallèlement à celui-ci, et qui est susceptible d'effectuer un mouvement de rotation dans la même direction, dans lequel tous les éléments du rouleau de dosage (18) sont situés sur dans la surface cylindrique de rotation du rouleau de dosage (18), caractérisé en ce que le rouleau de dosage (18) est une structure ouverte telle que les cavités situées entre les éléments (23) formant la surface cylindrique de rotation ne comportent pas de base.

2. Un dispositif selon la revendication 1, caractérisé en ce que ladite surface du rouleau est constituée de barreaux (23) montés de façon sensiblement axiale.

3. Un dispositif selon la revendication 1, caractérisé en ce que lesdits barreaux (23) sont sensiblement rectangulaires en coupe transversale.

4. Un dispositif selon la revendication 2 ou 3, caractérisé en ce que lesdits barreaux (23) sont fixés sur une pluralité de flasques disposés radialement (22), qui sont répartis sur la longueur dudit rouleau (18).

5. Un dispositif selon l'une quelconque des précédentes revendications, caractérisé en ce que ledit rouleau de dosage (18) n'est pas disposé exactement au-dessus dudit rouleau de désagrégation (10), mais quelque peu du côté des moyens de transport (4, 5) (côté alimentation).

6. Un dispositif selon l'une quelconque des précédentes revendications, caractérisé en ce que l'entraxe entre ledit rouleau de dosage (18) et ledit rouleau de désagrégation (10) est réglable.

7. Un dispositif selon l'une quelconque des précédentes revendications, caractérisé en ce que le diamètre dudit rouleau de dosage (18) est inférieur au diamètre dudit rouleau de désagrégation (10).

8. Un dispositif selon l'une quelconque des précédentes revendications, caractérisé en ce que la vitesse circonférentielle du rouleau de dosage (18) est inférieure à celle du rouleau de désagrégation (10).

9. Un dispositif selon l'une quelconque des précédentes revendications, caractérisé en ce que ledit rouleau de désagrégation (10) est entraîné à une extrémité tandis que l'autre extrémité dudit rouleau de désagrégation (10) est reliée mécaniquement audit rouleau de dosage (18).

10. Un dispositif selon l'une quelconque des précédentes revendications, caractérisé en ce qu'est prévu au dessus du rouleau de dosage (18), un espace à travers lequel peut passer la masse ensilée qui peut y être entraînée par le rouleau de dosage (18).

11. Un dispositif selon l'une quelconque des précédentes revendications, caractérisé en ce que les parois (26) du dispositif qui s'étendent parallèlement aux axes des rouleaux ont été rendues transparentes, au moins près de leurs parties supérieures, au moyen de cavités.

12. Un dispositif selon la revendication 11, caractérisé en ce que lesdites parois (26) sont, au moins partiellement, réalisées à partir d'un matériau en tôle perforée.

13. Un dispositif selon l'une quelconque des précédentes revendications, caractérisé en ce que lesdits moyens de transport (4, 5) comprennent une chaîne de fond (4) dont la vitesse et/ou la force de poussée est réglable.

14. Un dispositif selon la revendication 13, caractérisé en ce que ladite chaîne de fond (4) est entraîné hydrauliquement.

15. Un procédé de dosage de masse ensilée, dans lequel il est utilisé un dispositif selon l'une des précédentes revendications, dans lequel ladite masse ensilée est désagrégée et déplacée en direction ascendante par un rouleau de désagrégation (10) pourvu de moyens de prise (12), et dans lequel la masse ensilée acheminée le long dudit rouleau de désagrégation (10) est dosée au moyen d'un rouleau de dosage (18) agencé au dessus dudit rouleau de désagrégation (10), parallèlement à celui-ci, par la rotation dudit rouleau de dosage (18) dans la même direction, caractérisé en ce que les éléments (23) formant la surface de rotation cylindrique du rouleau de dosage (18) sont déplacés contre la masse ensilée, dans lesquels les cavités situées entre lesdits éléments (23) n'ayant pas de base.

16. Un procédé selon la revendication 15, caractérisé en ce que la vitesse circonférentielle dudit rouleau de dosage (18) est inférieure à celle dudit rouleau de désagrégation (10).
